(19) **Europäisches Patentamt**
**European Patent Office**
**Office européen des brevets**

(11) **EP 2 500 687 A2**

(12) **EUROPEAN PATENT APPLICATION**

(43) Date of publication:
**19.09.2012 Bulletin 2012/38**

(51) Int Cl.:
***G01B 11/25*** (2006.01)

(21) Application number: **12159368.5**

(22) Date of filing: **14.03.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **14.03.2011 CH 4232011**

(71) Applicant: **Heliotis SA**
**6037 Root (CH)**

(72) Inventors:
 • **Lambelet, Patrick**
 **6010 Kriens (CH)**

 • **Ettemeyer, Andreas**
 **9472 Grabs (CH)**
 • **Bach, Carlo**
 **9470 Buchs (CH)**
 • **Moosburger, Rudolf**
 **6332 Hagendorn (CH)**

(74) Representative: **Schneider Feldmann AG**
**Patent- und Markenanwälte**
**Beethovenstrasse 49**
**Postfach 2792**
**8022 Zürich (CH)**

(54) **Structured light projector**

(57)     In embodiments, a method for generating a spatially structured and spatially translating output light pattern comprises: generating at least n temporally modulated light that are equally phase shifted from one another by a suitable phase shift of, e.g., $2\pi/n$, wherein $n \geq 2$; and spatially intensity modulating by a temporally constant spatially intensity modulation function each one of said temporally modulated light.

Figure 1

**Description**

**FIELD OF THE DISCLOSED TECHNIQUE**

The disclosed technique refers to topographic surface height measurement systems and, more specifically, to structured light generators projection light for topographic surface height measurement.

**BACKGROUND OF THE RELATED ART**

Projection of structured light is used in several types of optical height measurement systems for topological surfaces. Examples of height detection methods used in such systems include but are not limited to triangulation. Many of these systems use a structured light pattern which is a periodic function of a first direction, (hereinafter: the x axis), orthogonal to the projection direction (hereinafter: the z axis) and independent to a second direction (hereinafter: y axis). In many cases the structured light pattern is furthermore shifted over time along the structured light pattern's direction of variation, i.e. along the $x$ axis. The pattern may either be discontinuously translated by a discrete distance at periodic discrete moments or, alternatively, the pattern may be translated continuously at a substantially constant speed at least over a duration that corresponds to a translation of more than half the spatial period of the periodic pattern. In the latter case, the structured light pattern as a function of time and position in a plane orthogonal to the projection direction is a travelling wave, as described by the following equation (EQN) 1 in the particular case of a sine wave pattern:

$$I(x, y, t) = I_0 + I_m \sin\left(2\pi\left(x/x_p - tf_m\right)\right) \ (1)$$

In the above expression x denotes the axis of variation of the structured light pattern, which is orthogonal to an axis z denoting the direction of the projection of the structured light, and $t$ denotes the time. $I(x,y,t)$ denotes the optical intensity of the projected light in a plane orthogonal to the projection direction as a function of x, y and t, $I_0$ denotes an offset intensity independent of position and time, $I_m$ denotes the amplitude of the temporal and spatial intensity variation of the light pattern, $f_m$ denotes the temporal demodulation frequency, and $x_p$ the spatial period of the pattern. It should be noted that other equations may be used to describe the projected light and that other functions than sine waves may be used to describe the intensity pattern of the projected light.

The related art discloses projectors that achieve a time-shifted periodic pattern by projecting light of substantially uniform and constant intensity across a rigid periodic transmission filter pattern and by applying mechanical movement to said transmission filter pattern.

The transmission filter pattern may be characterized by a periodic variation of the transmission coefficient along the x axis. In the case of continuous translation over time, the movement applied to the transmission filter may be substantially equal to a sawtooth-like temporal waveform. Alternatively, the filter may be translated at discrete moments over discrete distances. As a consequence, the acquisition rate of measurements systems employing projectors and which rely on mechanical motion of static filter patterns is limited by finite translation speed of the filter relative to the projector. Furthermore, the finite mechanical speed at the discontinuities of the sawtooth-like translation waveform in the case of continuous travelling wave operation or at the position transition in the case of discontinuous translation at discrete points of time may introduce measurement errors during the reconstruction of the surface height by the topographic measurement system.

Alternatively implementations of topographic measurement systems that achieve pattern translation by employing projectors together with liquid crystal display (LCD) technology or arrays of digital mirror devices (DMD). A DMD is a Micro-Electromechanical Systems (MEMS) that comprises an array of actuatable mirrors. Under many circumstances projectors based on LCDs or DMDs allow higher translation speeds of the projected pattern than projectors based on mechanical translation of a static filter pattern. With LCD or DMDs the resolution is limited to, for example, 1000 times 1000 points. Therefore, the above-mentioned structured light projectors are limited by the spatial resolution of the static filter pattern.

High-speed image acquisition devices of topographic measurement systems are able to process structured light patterns of very high modulation frequencies which may range, for example, from 100 kHz to 1 MHz. Even topographic measurement systems that employ LCDs or DMDs do not achieve such high modulation frequencies of the structured light pattern and, therefore, still limit the overall acquisition rate of the topographic measurement system employing a high-speed image acquisition device. Furthermore, the structured light patterns projected by LCDs and DMDs are spatially discrete. The resulting finite spatial resolution can be a limiting factor for the measurement accuracy achieved by the topographic measurement system employing a projector in conjunction with LCDs or DMDs.

Mermelstein et al. (Video-rate surface profiling with acousto-optic accordion fringe interferometry, Opt. Eng. 39(1) 106-113, (January 2000)) discloses a high-speed structured light projector based on interference fringe patterns.

However, the device disclosed by Mermelstein is rather complex and expensive to manufacture since it requires an acousto-optic-modulator and a temporally coherent light source such as a laser. Furthermore the use of a laser usually involves the presence of speckles which lead to undesired variation in the intensity of the fringe pattern reflected from the sample surface to be measured.

## DESCRIPTION OF THE FIGURES

Features and advantages of the disclosed technique will become apparent in the light of the ensuing description of some embodiments thereof, given by way of example only, with reference to the accompanying figures, wherein:

**Figure 1** is a schematic illustration of a structured light generator according to embodiments of the technique;

**Figure 2** is a schematic illustration of a structured light generator according to embodiments of the technique using light emitting diodes (LEDs) for the implementation of temporally modulated light sources and beam splitters for the superposition of composing light patterns;

**Figure 3** is a schematic illustration of a structured light generator employing a reflector for spatial modulation of the intensity of the composing light pattern;

**Figure 4** is a schematic illustration of a structured light generator employing spatially modulated transmission filters combined on a substrate exhibiting different wavelengths of their respective maxima of the transmission coefficient;

**Figure 5** is a schematic illustration of a structured light generator employing temporally modulated light sources combined in a single light source with temporally tuned wavelength;

**Figure 6** is a schematic illustration of a topographic surface height measurement system comprising a structured light generator and an acquisition device observing the sample surface at a non-zero angle from the light projection direction; and

**Figure 7** is a flow-chart of a method for generating a spatially structured and translating output light pattern.

It will be appreciated that for simplicity and clarity of illustration, elements shown in the figures have not necessarily been drawn to scale. For example, the dimensions of some of the elements may be exaggerated relative to other elements for clarity.

## DESCRIPTION OF THE EMBODIMENTS THE TECHNIQUE

It is the object of the technique to overcome at least some of the above-mentioned disadvantages associated with structured light generators.

According to an embodiment, a motion-free structured light generator is operative to provide a spatially structured and translating output light pattern that displays the properties of a continuously or discontinuously spatially translated light pattern.

It should be noted that the term "motion-free" as used herein refers to a configuration that at least obviates the need of moving a projector of structured light generator relative to a transmission filter pattern, and vice versa, as well as the employment of a liquid crystal display (LCD) and/or a Micro-Electromechanical System (MEMS).

The terms "collimating" and "collimated" as well as grammatical variations thereof encompass the meaning "at least approximately collimating" and "at least approximately collimated", respectively.

The term "constant" as well as grammatical variations thereof encompass the meaning of the term "at least approximately constant".

The structured light generator achieves spatial translation of the output light pattern without mechanical motion, i.e., in a motion-free manner, by superposition of at least two composing light patterns in a manner that generates a spatially structured and translating output light pattern.

Each one of the composing light patterns can be expressed as a product of a spatially constant temporally modulated function times a temporally constant spatially modulated intensity function. Therefore, by employing a temporally modulated light source and a spatial intensity modulator such as, for example, a spatially structured reflector or transmission filter for each composing light source, spatial translation of the spatially structured and translating output light pattern may be generated without mechanical motion by the projector and/or of a translation filter pattern relative to each other.

Several combinations of temporal modulation functions to the temporally modulated light sources and spatial modulation functions to the spatial intensity modulators may be employed in order to achieve the desired properties of spatially structured and output light pattern that is spatially translating. For example, regardless of the position along the translation axis x, the spatially structured and translating output light pattern exhibits the same spatially translated intensity pattern. Otherwise stated, the composed spatially structured and translating output light exhibits, as a function of time, a spatially shifting intensity pattern that exhibits, for each shifting distance and point of time, an at least approximately constant or rigid pattern. Otherwise stated, the spatially structured and translating output light pattern exhibits, as a function of time, along a translation axis x a spatially shifting or translating rigid intensity pattern. For example, at least n (n≥3) sine wave temporal modulation functions, each having a mutual phase difference of, .e.g., $2\pi/n$ of a temporal period, may be used in combination with n sine wave spatial modulation functions, each having a mutual phase difference of, e.g., $2\pi/n$ of a spatial period. Alternatively, n (n≥2) square wave temporal modulation functions may be used, each having a mutual phase difference of, e.g., $2\pi/n$ of a temporal period, in combination with n square wave spatial modulation functions, each having a mutual phase difference of, e.g., $2\pi/n$ of a spatial period.

In embodiments, temporally modulatable light sources such as light emitting diodes (LEDs) operatively coupled with electronic LED driving circuits may be employed for obtaining temporally modulated light. The temporal modulation frequency of, for example, an LED, and consequently the pattern translation speed at a given spatial period of the pattern, may have a modulation frequency of as high as several tens Megahertz like, for instance, up to 50 MHz. Furthermore, the light emitted by LEDs is at least approximately spatially incoherent and basically free of speckles. As a consequence, a projector employing LEDs as a light source can operate in a substantially speckle-free manner. Moreover, temporally modulatable light sources that that are embodied by LEDs which are operatively coupled to LED driving circuitry may be relatively insensitive to changes of ambient temperature.

Spatial modulators are employed to obtain a spatial modulation function that may be applied to each one of the composing light sources separately. Spatial modulators may for example be embodied by spatially modulated transmission filters. Such transmission filters may be implemented by, for example, photo-chemically exposed and developed slide films. Such slide films are characterized by high spatial resolution of, for example, more than 1000 x 1000 points, namely, a resolution which may for example be defined by a film such as, for example, at least 24000 points x 36000 points. Structured light generators according to the disclosed technique may, therefore, achieve a corresponding lateral resolution.

In embodiments, the composing light patterns may be superposed by employing a corresponding number of beam splitters.

In embodiments, the spatial modulation functions may be applied to each of the composing light sources by employing reflectors having spatially modulated reflectivity.

In embodiments, a plurality of spatially modulated transmission filters may be combined on a substrate, wherein each spatially modulated transmission filter has different wavelength dependencies of their transmission coefficients. Furthermore, the modulated light sources of such embodiments may have different center wavelengths of their respective emitted spectra. The center wavelength of the light sources' emitted spectra may match the wavelengths of maximum spatial modulation of the spatially modulated transmission filters. Such embodiments using transmission filters combined on a substrate may obviate the need of employing any beam splitters for the superposition of the composing light patterns and may, therefore, achieve an improved ratio of optical power of the spatially structured and translating output light pattern over sum of optical power delivered by the temporally modulated light sources.

In embodiments, the spatially modulated transmission filters may be combined on a substrate and may have different wavelength dependencies respective of their transmission coefficients. Additionally or alternatively, several temporally modulated light sources of several light pattern generators may be combined in a single light source having a temporally tunable wavelength.

In embodiments, a topographic surface height measurement system (hereinafter: topography measurement system) is disclosed that includes a motion-free structured light generator and an optical acquisition device. The surface topography measurement system may use the structured light generator to project a light pattern on a sample surface. The optical acquisition device is positioned such to receive the light pattern reflected from the sample surface at a non-zero angle relative to the projection direction which is defined by axis *z*.

The topography measurement system may further include a height-determining device that is operative to determine the temporal phase shift of the light pattern reflected as a function of the spatial location. If the sample surface is observed at a non-zero angle, the spatial evolution of the temporal phase shift is a measurement of the spatial evolution of topological surface height.

In embodiments, a method for generating a spatially structured and spatially translated output light pattern comprises the following procedures: a) generating at least n temporally modulated lights that are equally phase shifted from one another by a suitable, corresponding phase shift, wherein n ≥ 2; and b) spatially intensity modulating by a temporally constant spatially intensity modulation function each one of the temporally modulated lights.

In embodiments, procedure b) may comprise: b1) spatially intensity modulating by a temporally constant spatially intensity modulation function each one of the temporally modulated lights to obtain composing light patterns; and b2) superposing the composing light patterns to obtain a spatially structured and spatially translating output light pattern.

In embodiments, procedure b) may comprise b1) superposing the temporally modulated lights; and b2) spatially intensity modulating by a temporally constant spatially intensity modulation function the superposed temporally modulated lights to obtain a spatially structured and spatially translating output light pattern.

In embodiments, the method may further comprise the procedure of d) illuminating a sample surface with the spatially structured and spatially translating output light pattern to obtain a reflected light pattern, and e) determining the local phase shift of the reflected output light pattern.

In embodiments, the spatial intensity modulation function of at least one of the composing light patterns may be a temporally varying sine-based function.

In embodiments, the spatially structured and translating output light pattern is continuously translating.

In embodiments, the spatial intensity modulation function of at least one of the composing light patterns is a temporally varying square-wave based function.

In embodiments, the spatially structured and translating output light pattern is discontinuously translating.

In embodiments, the intensity of the spatially structured and translating output light pattern exhibits a spatial translation over time of a spatially rigid intensity pattern.

In embodiments, the method may comprise the procedure of collimating the temporally modulated lights.

In embodiments, a structured light projector comprises: at least one structured light generator that may comprise at least one light source and at least one temporal modulator, wherein the at least one structured light generator and the at least one temporal modulator are configured to be operative to emit n temporally modulated lights that are equally phase shifted from one another by a suitable phase shift of, e.g., $2\pi/n$, wherein $n \geq 2$; and at least one spatial transmission filter that is optically coupled with the at least one light source and configured such to be operative to apply a temporally constant spatially intensity modulation function to each one of the temporally modulated lights.

In embodiments, the structured light projector may comprise superposing optics that is operative to superpose composing light patterns generated by at least one structured light generator or to superpose temporally modulated lights.

In embodiments, the structured light projector may comprise at least one collimator that is operative to collimate the temporally modulated light to obtain temporally collimated light.

In embodiments, the transmission filter may comprise at least two colour filters that are arranged in superposition such that the transmission filter applies a spectrum-dependent spatial modulation function when illuminated with light at varying spectra to which the transmission filter is responsive such that at the output of transmission filter a correspondingly varying and spatially translating output light pattern is obtained. \

In embodiments, a topographic surface height measurement system may include a structured light projector according to any of the above outlined embodiments.

In embodiments, the topographic surface height measurement system may further include an optical acquisition device that is positioned at a non-zero angle with respect to the projecting axis z of the structured light projector.

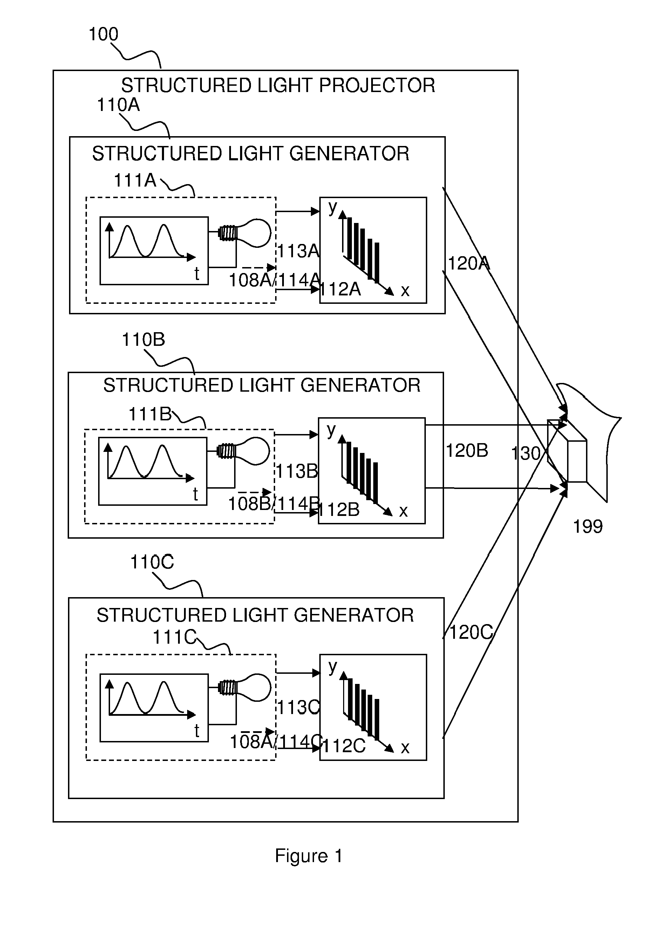

Reference is now made to **Figure 1.** A structured light projector **100** may comprise at least two structured light generators **110** each of which generates a composing light pattern **120.** For example, a first structured light generator **110A,** a second structured light generator **110B** and a third structured light generator **110C** respectively generate a first composing light pattern **120A,** a second composing light pattern **120B,** and a third composing light pattern **120C.**

Although embodiments are outlined herein with respect to Figures schematically illustrating three structured light generators **110,** this should by no means to be construed as limiting. Correspondingly, two, four or more light generators **110** may be employed, as later outlined herein below. In any event, to simplify the discussion that follows, term such as "at least two structure light generators", and "at least three structured light generators" and the like, as well as grammatical variations thereof, are hereinafter generally referred to as "structured light generators".

The composing light patterns **120** generated by structured light generators **110** are superposed with each other. The superposition of the composing light patterns **120** creates a spatially structured and translating output light pattern **130** that is projected onto a sample surface **199** for topological height measurement.

Each one of structured light generators **110** comprises a temporally modulated light source **111** and a spatial intensity modulator **112.**

Modulated light sources **111** are operative to emit light at an output intensity **113** having the characteristics of a temporal modulation function applied to a spatially constant intensity distribution.

Output intensity **113** of the modulated light sources **111** is respectively modulated by spatial intensity modulators **112** to attain composing light patterns **120.** The modulation applied to the intensity by spatial intensity modulators **112** is a temporally constant spatial intensity modulation. As a result of the temporal modulation and spatial modulation applied by modulated light sources **111** and spatial intensity modulators **112** respectively, each one of the resulting plurality of composing light patterns **120** has an intensity *I* that can be expressed as a product of a spatial modulation function and a temporal modulation function.

The properties of each of one spatial modulators **112** and of each of the temporally modulated light sources **111** of structured light generators **110** may be chosen so that the superposition of composing light patterns **120** results in the spatially structured and translating output light pattern **130** which displays the properties of the spatially shifting rigid intensity pattern.

The above assertion is verified by the analysis of an embodiment of the disclosed technique. Consider an embodiment comprising, for example, three structured light generators **110A, 110B** and **110C.** Assume that the temporal modulation functions of the temporally modulated light sources **111** of the, e.g., three structured light generators **110** are sine waves and that a temporal phase shift of a third of a modulation period is applied between said temporal modulation functions. In this case, the three , e.g., output intensities **113** $I_{tem113A}(t)$, $I_{temp113B}(t)$, $I_{temp113C}(t)$ of the

modulated light sources **111A, 111B** and **111C** of the, e.g., three structured light generators **110A, 110B** and **110C,** may be expressed by the following **EQN 2, EQN 3,** and **EQN 4,** respectively:

$$I_{temp113A}(t) = I_{const} \cdot \left(1 + \sin\left(2\pi f_m t\right)\right) \qquad (2)$$

$$I_{temp113B}(t) = I_{const} \cdot \left(1 + \sin\left(2\pi f_m t + 2\pi/3\right)\right) \qquad (3)$$

$$I_{temp113C}(t) = I_{const} \cdot \left(1 + \sin\left(2\pi f_m t + 4\pi/3\right)\right) \qquad (4)$$

In the above expressions, $I_{const}$ is a constant Intensity value, $t$ denotes time and $f_m$ is the frequency of the temporal modulation. It should be noted that alternative mathematical terms may be used to describe the output intensities **113** of the modulated light sources **111.**

Considering, for example, that the spatial modulation functions of the , e.g., three spatial intensity modulators **112A, 112B** and **112C** respective of the three structured light generators **110A, 110B** and **110C** are sine functions of a first spatial direction x orthogonal to the projection direction $z$ of structured light projector **100** and that the spatial modulation functions are independent of second spatial direction $y$ orthogonal to the said first spatial direction $x$ and orthogonal to said projection direction $z$ of the composing light pattern by structured light projectors **100**. Considering furthermore, that a mutual spatial phase shift of, e.g., a third of the spatial period is applied between, e.g., the three spatial modulation functions of spatial intensity modulators **112** of the three structured light generators **110.** In this case the three spatial modulation functions $m_{spat112A}(x, y)$, $m_{spat112B}(x, y)$, $m_{spat112C}(x, y)$ respective of spatial intensity modulators **112A, 112B** and **112C** of the three structured light generators 110 may be expressed by the following **EQN 5, EQN 6,** and **EQN 7:**

$$m_{spat,112A}(x, y) = 1 + \sin\left(2\pi x/x_p\right) \qquad (5)$$

$$m_{spat112B}(x, y) = 1 + \sin\left(2\pi x/x_p + 2\pi/3\right) \qquad (6)$$

$$m_{spat112C}(x, y) = 1 + \sin\left(2\pi x/x_p + 4\pi/3\right) \qquad (7)$$

In the above expressions $x$ is the distance along a first axis orthogonal to the projection direction $z$ of structured light projectors **100A, 100B** and **100C,** $y$ is the distance along a second axis, orthogonal to the projection direction $z$ of structured light projector **100** and orthogonal to said first axis, and $x_p$ is the spatial period of the spatial modulation functions of spatial intensity modulators **112A, 112B,** and **112C** in the three structured light generators **110A, 110B** and **110C.** It should be noted that different expressions may be used to describe the spatial modulation functions of spatial intensity modulators **112.**

The superposition of the composing light patterns **120** may be performed by summation of the, e.g., three products of the output intensities **113A, 113B** and **113C** of the modulated light sources **111A, 111B** and **111C** times the spatial modulation functions of the corresponding intensity modulators **112A, 112B** and **112C.** This process of superposition may be expressed by the following **EQN 8** and **EQN 9:**

$$I_{out}(x, y, t) = I_{temp113A}(t) \cdot m_{spat112A}(x, y) + I_{temp113B}(t) \cdot m_{spat112B}(x, y) + I_{temp113C} \cdot m_{spat112C}(x, y) \quad (8)$$

$$I_{out}(x, y, t) = I_{out}\left(x/x_p - f_m t\right) = I_{const}\left(3 + \frac{3}{2}\cos\left(2\pi\left(x/x_p - f_m t\right)\right)\right) \quad (9)$$

In the above expressions $I_{out}(x, y, t)$ denotes the intensity of the, superposed, spatially structured and translating output light pattern **130** as a function of spatial position and time. It should be noted that alternative mathematical terms may be used to describe the intensity of spatially structured and translating output light pattern **130**. It is essential to note that the intensity of output light pattern **130** can be expressed as a function of $x/x_p - f_m t$, i.e. as a function of a difference of weighted spatial distance and time. This means, that the intensity of spatially structured and translating output light pattern **130** has the characteristics of a rigid intensity pattern translated or shifting along translation axis x as a function of time. The translation or shifting of the rigid intensity pattern is obtained by employing structured light projector **100** that is free of moving parts. Hence, motion-free structured light projector **100** eliminates or overcomes constraints in acquisition speed that might otherwise be present if mechanically moving parts were employed. Consequently, the image acquisition speed of a topography measurement system employing motion-free structured light projector **100** is now only limited by the frame acquisition speed of the high-speed acquisition device and the temporal modulation frequency of modulated light sources **111**.

In embodiments, and as briefly mentioned herein, at least four structured light generators **110** (not shown) may be employed. For example, four structured light generators **110** may be used in conjunction with a temporal shift of one fourth of a modulation period between the output intensities **113** of the modulated light sources **111** of the four structured light generators **110**. Accordingly, a spatial phase shift of, e.g., one fourth, of a spatial period between the spatial modulation functions may be applied by four spatial intensity modulators **112** respective of the four structured light generators **110**.

Embodiments of the disclosed technique may use different temporal modulation functions of the temporally modulated light sources **111**. For instance, square wave temporal modulation functions may be used. In embodiments, structured light generators **110** may thus be operative to apply at the light source square wave modulation functions having duty cycles and suitable phase shifts chosen in a way that sequentially turns on and off all temporally modulated light sources **111** one after each other. In this case the intensity of spatially structured and translating output light pattern **130** is defined by the temporal succession of the spatial modulation functions applied by spatial intensity modulators **112** on the high level of the square waveform of output intensity **113**. If the spatial modulation functions of spatial intensity modulators **112** of structured light generators **110** are substantially equal base patterns related to each other by a phase shift, such as the examples described by **EQN 5, EQN 6,** and **EQN 7,** then spatially structured and translating output light pattern **130** is described by discontinuous translation of a rigid pattern rather than by the continuous translation of a rigid pattern as described by **EQN 9.** Such discontinuous translation of a rigid pattern based on square waves may be expressed, for example, by the following **EQN 10:**

$$I_{out}(x, y, t) = \begin{cases} I_{const} & \text{if } x - x_{shift} \in \left(ix_p, \left(i + \frac{1}{2}\right)x_p\right) \\ 0 & \text{otherwise} \end{cases}$$

In embodiments where the number of composing light patterns is n≥2:

$$x_{shift}(t) = \begin{cases} x_p/n & \text{if } t \in \left(j/f_m, (j + 1/n)/f_m\right) \\ 0 & \text{otherwise} \end{cases}$$

where i,j denote positive integers, $f_m$ denotes the temporal modulation frequency, $x_p$ denotes the spatial modulation period, $n$ denotes the number of composing light patterns and $I_{const}$ denotes a constant intensity.

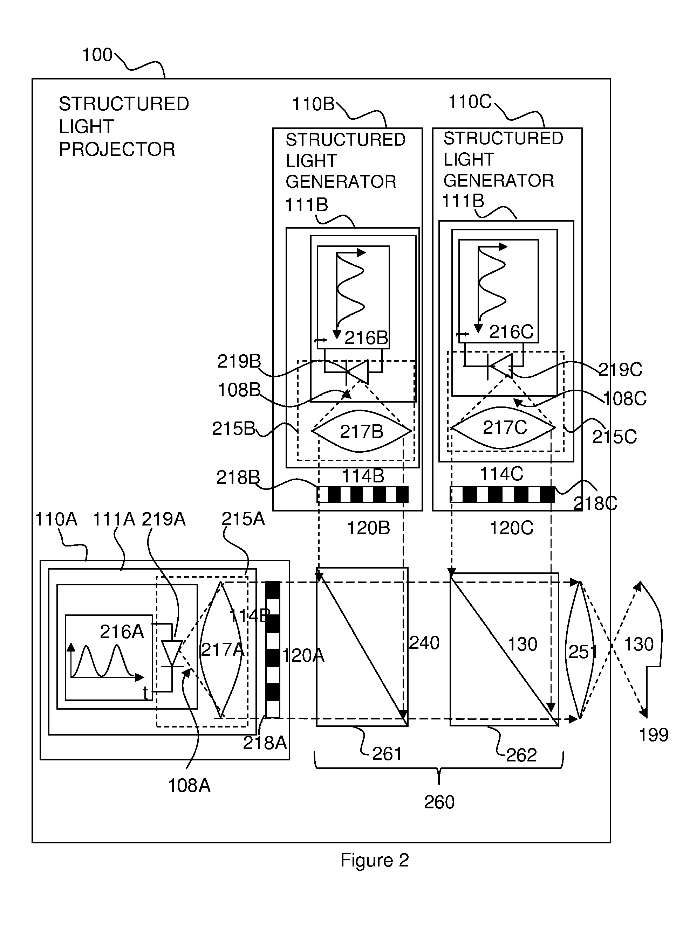

Additional reference is now made to **Figure 2.** It should be noted that in order to simplify the discussion that follows, generalization of the reference numbers indicated in **Figure 2** is made where the discussion relates to identical or analogous features. For example, a reference made herein to "transmission filters **218''**, should be understood and read as "first transmission filter **218A,** second transmission filter **218B** and third transmission filter **218C''.** It should further be noted that where generalization in respect of the light propagating in the disclosed system, generalization of reference numbers indicated in **Figure 2** should not be construed as indicating light having identical properties. For example, a reference that is made to "composing light patterns **120''** should be understood as "first composing light pattern **120A,** second composing light pattern **120B** and third composing light pattern **120C''.** As is outlined hereinabove, the characteristics of, for example, first composing light pattern **120A** with respect to second composing light pattern **120B** may not be identical, e.g., at least with respect to their phase shift. Accordingly, generalizations made for features referring to light propagating in the system should, depending on the circumstances, only be construed as indicating analogous features.

In embodiments, structured light projector **100** includes structured light generators **110** which employ temporally modulated light sources **111** and spatial intensity modulators **112** that may be embodied by spatial transmission filters **218.** Temporally modulated light sources **111** may be operative to emit temporally modulated lights **108,** which may in some embodiments be collimated temporally modulated lights **114.**

Temporally modulated light sources **111** and transmission filters **218** may be optically coupled with each other such that temporally modulated light **108** is incident onto transmission filters **218,** which in turn, causes temporally modulated light beam **108** to be spatially intensity modulated, resulting in composing light patterns **120** emanating from transmission filters **218** at the respective outputs of structured light generators **110.**

Structured light projector **100** may employ beam splitters which are optically coupled with structured light generators **110** in a manner such that composing light patterns **120** are superposed with each other, as outlined herein below in greater detail, by employing superposing optics **260,** which may be embodied, for example, by at least one beam splitter, as outlined herein below.

In embodiments, a part of first composing light pattern **120A** may be transmitted through a first beam splitter **261** and a part of second composing light pattern **120B** is diverted by reflection into the optical path of first composing light pattern **120A,** resulting in superposition of the transmitted part of first composing light pattern **120A** with the reflected part of second composing light pattern **120B** and yielding a first superposed light pattern **240.** Furthermore, another part of first superposed light pattern **240** propagates through a second beam splitter **262.** Transmission filter **218C** is optically coupled with second beam splitter **262** such that a part of third composing light pattern **120C** is incident onto second beam splitter **262** and diverted by reflection into the optical path of the other part of first superposed light pattern **240.** Consequently, superposition of the other part of first superposed light pattern with the reflected part of third composing light pattern **120C** results in the generation of spatially structured and translating output light pattern **130.** In embodiments, spatially structured and translating output light pattern **130** may be imaged onto a sample surface **199.** In some embodiments, structured light projector **100** may include projecting optics **251** (e.g., a projecting lens) for projecting spatially structured and spatially translating output light pattern **130** onto sample surface **199.**

Temporally modulated light sources **111** may, for example, be embodied by temporal modulators **216** and light source **215.** Temporal modulators **216** may be operatively coupled with light source **215** such to be operative to apply on light source **215** a temporal modulation function resulting in a respectively temporally modulated light **114** at the output of temporally modulated light sources **111.**

The properties and control signals of temporal modulator **216** are chosen in order to achieve a predetermined temporal modulation function of the intensity delivered by light sources **215.** Temporal modulators **216** may for example be embodied by suitable driving circuitry (not shown) such as, for example, a LED driving circuitry or a laser diode driving circuitry.

Light source **215** may for example be embodied by a point light source **219** (e.g., a LED or a laser diode), and a collimator **217** (e.g., at least one collimating lens and/or other optical member) wherein point light source **219** is optically coupled with collimator **217** in a manner such that light emitted by point light source **219** and transformed by collimator **217** is collimated. The term "point light source" refers to a light source that is negligibly small compared to other optical elements of the system.

The angular emission properties of point light source **219** and the distances between collimator **217** and point light source **219** and transmission filter **218** are chosen such to achieve at least approximately spatially uniform illumination of transmission filter **218.** In embodiments wherein collimators **217** are employed, this goal can be achieved even if the physical dimension of light source **215** is significantly smaller than the size of transmission filter **218** in any direction orthogonal to the optical axis of light source **215.** Light incident onto transmission filter **218** may even be at least approximately collimated, if light source **215** comprised an ideal point light source **219** of infinitesimal size and if the spacing between ideal point light source **219** and collimator **217** were substantially equal to the focal length of collimator **217.**

In some embodiments, light source **215** may be embodied, for example, by a large area light source such as, for example, an array of point light sources **219** like, e.g., several LEDs, that are arranged in a manner to output collimated light that obviates the need of employing collimators **217.**

It should be noted that in some embodiments, temporal modulators **216** of at least two or all structured light generators **110** may be integrated in a modulation controller (not shown), which may be part of one a structured light generator, (e.g., structured light generator **110A),** part of structured light projector **100** or be external to structured light projector **100**. Furthermore, in some embodiments, at least one or all temporal modulators **216** may be external to structured light generator **110** or structured light projector **100**.

The transmission coefficient of transmission filter **218** has a spatial distribution chosen so that transmission filter **218** applies a spatial intensity modulation function to the transmitted intensity, i.e. to composing light pattern **120**. The spatial modulation function applied by transmission filter **218** may, for example, be a square wave function or a sine function, such as described by **EQN 5, EQN 6,** or **EQN 7.**

In some embodiments, first beam splitter **261** may provide a transmission coefficient of, for example, about 50% and a reflection coefficient of about 50%, whereas second beam splitter **262** may provide a transmission coefficient of, for example, two thirds and a reflection coefficient of one third.

It should be noted that alternative properties of first beam splitter **261** and second beam splitter **262** may be used. For example, second beam splitter **262** may provide a reflection coefficient of two thirds and a transmission coefficient of one third. In this alternative case, projecting optics **251** and sample surface **199** may be geometrically placed in order to be subjected by the part of first superposed light pattern that is reflected by second beam splitter **262** and the part of the composing light pattern **120C** of the third structured light generator **110C** that propagates through second beam splitter **262**. In other words, projecting optics **251** would be placed in front of an alternative face of second beam splitter **262.**

In some embodiments, at least one beam splitter having polarization dependent properties may be employed. For instance, first beam splitter **261** may fully transmit light of a specific planar polarization direction from first structured light generator **110** and may fully reflect light of an orthogonal polarization direction from second structured light generator **110** whereas second beam splitter **262** may be characterized by reflectivity and transmission coefficient of 50%. Thusly configured, a reduction in the loss of optical power may be achieved when used in conjunction with modulated light sources **111** providing polarized light.

Due to non-zero geometrical size of point light sources **219** of structured light generators **110** and due to diffraction of temporally modulated light by transmission filter **218,** light incident onto first beam splitter **261** and second beam splitter **262** is not perfectly collimated but diverging. Therefore, the images of composing light patterns **120** observed in the object planes of the transmission filters **218** and superposed by first beam splitter **261** and second beam splitter **262** may need to be focussed onto sample surface **199**. This focussing may performed by projecting optics **251**. The geometrical positioning and focal length of projecting optics **251** may be chosen so that the object plane of the transmission filters **218** of the structured light generators **110** is focussed onto the image plane of sample surface **199**. Projecting optics **251** may, for example, be embodied by at least one projecting lens.

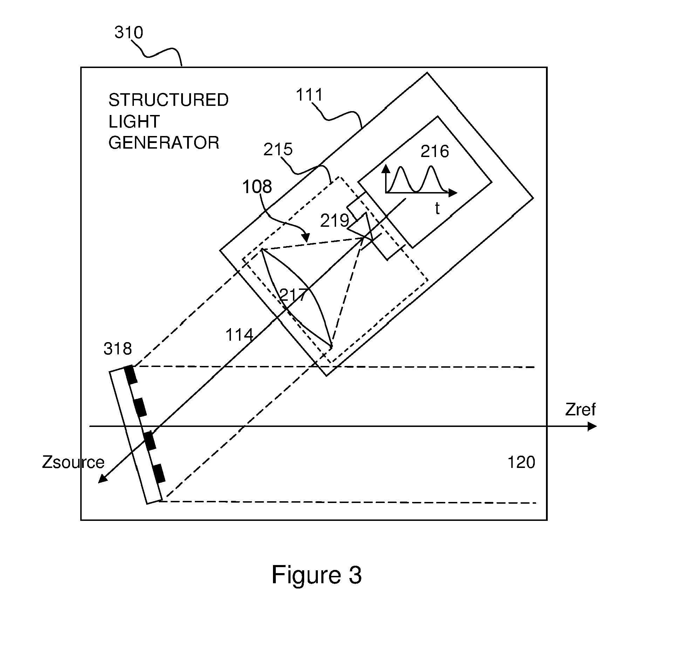

Additional reference is now made to **Figure 3.** In embodiments, a structured light generator **310** may include temporally modulated light source **111** and a reflector **318** which are optically coupled with each other such that at least some of the temporally modulated light **108** emitted by temporally modulated light source **111** is incident onto reflector **318.** The reflectivity of reflector **318** may have a spatial distribution chosen so that reflector **318** applies a spatial modulation function to temporally modulated light **108,** which in turn generates composing light pattern **120**. Accordingly, reflector **318** may constitute spatial intensity modulator **112**. As is schematically illustrated, optical axis $Z_{ref}$ of reflector **318** may be angularly offset from the optical axis of temporally modulated light source **111** $Z_{source}$.

The spatial modulation function applied by reflector **318** may, for example, be a square wave function or a sine function, such as described by **EQN 5, EQN 6,** or **EQN 7.**

In embodiments, structured light projector **100** may comprise at least one structured light generator **110** employing transmission filters **218,** as well as at least one structured light generator **310** employing reflectors **318**. For example, a substrate (not shown) may be shared by two structured light generators, wherein the substrate may be provided on one side with a transmission filter **218** respective of a first structured light generator **110A** and on a second side with a reflector **318** respective of a second structured light generator **310B.**

In some embodiments, spatial intensity modulator **112** may be, for example, be implemented by shaping microlens arrays or diffractive elements may be used. Spatial intensity modulators **112** which are embodied by microlens arrays or diffractive elements may exhibit superior optical efficiency than spatial intensity modulators **112** that are embodied by transmission filters or reflectors.

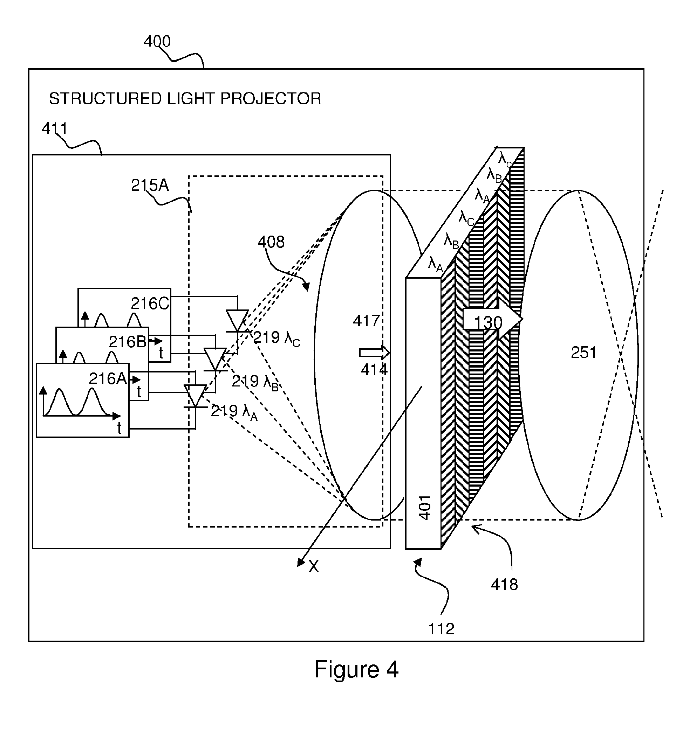

Reference is now made to **Figure 4.** It should be noted that the term "superposition" as used herein with respect to colour filters, as well as grammatical variations thereof, does not necessarily mean that the colour filters are overlapping. Correspondingly, the colour filters may in some embodiments be arranged in an interdigitated manner.

In an alternative embodiment of the disclosed technique, a transmission filter **418** of at least two structured light generators **110** may comprise colour filters (not shown) that may be arranged, for example, on a substrate **401,** in a manner such to constitute spatial intensity modulator **112,** as outlined herein below in greater detail. In some embodiments, the temporally modulated light sources **111** of such an embodiment employ collimators **417**. Accordingly, the latter may be shared by the at least two structured light generators **110.**

With respect to **Figure 4,** such an embodiment may further include, for instance, at least two temporal modulators **216,** at least two point light sources **219,** collimator **417.** Such an embodiment may furthermore comprise projecting optics **251.**

Point light sources **219** may be operative to emit at least two (e.g., three) different centre wavelengths $\lambda_A$, $\lambda_B$, $\lambda_C$ respective of their emitted spectra. For instance, a first point light source **219A,** a second point light source **219B,** and a third point light source **219C** may emit red, green, and blue light, respectively.

The geometrical arrangement of the at least two point light sources **219,** collimator **417,** and transmission filter **418** may be such to result in a substantial or complete overlap of the area on transmission filter **418** illuminated by the light emitted by the three LEDs **219,** respectively. Accordingly, point light sources **219,** and optionally collimator **417** may constitute superposing optics **260.**

Furthermore, transmission filter **418** exhibits different wavelength dependencies with respect to their transmission coefficients. The wavelength of maximum modulation of the transmission coefficients may at least approximately match the centre wavelengths of the at least two point light sources **219.** For example, the transmission coefficient of a first colour filter (not shown) may have a maximum spatial modulation at the centre wavelength $\lambda_A$ of first point light source **219A** and be spatially substantially constant at the centre wavelengths $\lambda_B$ and $\lambda_C$ of second point light source **219B** and third point light source **219C,** respectively. Furthermore, the transmission coefficient of a second colour filter (not shown) may have a maximum spatial modulation at the centre wavelength $\lambda_B$ of second point light source **219B** and be spatially substantially constant at the centre wavelengths $\lambda_A$ and $\lambda_C$ of first point light source **219A** and third point light source **219C** respectively. Finally, the transmission coefficient of a third colour filter (not shown) may have a maximum spatial modulation at the centre wavelength $\lambda_C$ of third point light source **219C** and be spatially substantially constant at the centre wavelengths $\lambda_A$ and $\lambda_B$ of first point light source **219A** and second point light source **219C,** respectively.

Point light sources **219** may be temporally variably activated, for example, sequentially in an alternating ON/OFF sequence. For example, first point light source **219A** may be activated at $t_1$ for a predetermined duration, the second point light source **219B** may be activated at $t_2$ for the predetermined duration, and then third point light source **219C** may be activated at **t3** for the same predetermined duration. Alternatively, intensities of light sources **219A** may be continuously varied in accordance with a period of sine-based function.

The spatial modulation functions of the colour filters arranged in superposition to constitute transmission filter **418** may, for example, be spatially phase shifted sine wave or square wave patterns, as given in the above descriptions of the embodiments.

More specifically, transmission filter **418** is constructed in a manner such to attain spatially structured and spatially translating output light pattern **130,** in response to the temporally varying activation of point light sources **219.** For example, transmission filter **418** may be implemented by superposing at least two colour filters (not shown) such that the functions of the absorption coefficient respective of the colour filters are spatially (laterally) shifted relative to each other along the X-axis. The transmission pattern of one light spectrum at the output of transmission filter **418** is thus spatially shifted relative to the transmission pattern of another light spectrum. As a consequence, varying illumination of transmission filter **418** with light having different spectra results in a correspondingly temporally varying absorption and spatially translating transmission pattern of light at the output of transmission filter **418.** The at least two colour filters may be arranged in an interdigitated alignment or overlapping manner. For example, alternatingly illuminating transmission filter **418** comprising two interdigitated arranged colour filters with light at different (correspondingly alternating) spectra, i.e., alternating the illumination between a first and a second spectrum, results in spatially shifting between a first and a second transmission pattern at the output of transmission filter **418** respective of the first and the second spectrum.

Transmission filter **418** may thus apply a spectrum-dependent spatial modulation function. Each one of superposed colour filters exhibits a laterally varying absorption coefficient (e.g. continuously or discontinuously varying), resulting in a corresponding spectral-dependent spatial modulation function that is applied by transmission filter **418** on incident light having varying spectra which are respectively absorbed by the layers of colour filters employed. The absorption coefficient of the transmission filter at the respective wavelength of maximum spatial modulation may vary continuously as a function of spatial position. For instance the absorption coefficient may be a sine wave function along a coordinate axis x orthogonal to the projection direction in accordance with the spatial modulation functions as described by **EQN 5, 6,** or **7.**

Superposed interdigitated aligned arrangement of colour filters may for example be employed in embodiments where transmission filter **418** is varyingly (e.g., alternatingly) illuminated with light having $i$ output intensities **113,** the intensities **113** respective of the spectra exhibiting a square wave temporal waveforms with a duty cycle of *1/i.*

Alternatively, transmission filter **418** may be illuminated with sine-based, temporally phase-shifted continuously intensity varying output intensities **113** by, for example, at least three temporally modulated point light sources **219** in accordance with EQN. **2, 3** and **4.** In addition, at least three colour filters may be arranged in superposition in an interdigitated or in an overlapping manner as outlined hereinabove. As a consequence, the image projected by transmission filter **418,** e.g., onto sample surface **199,** e.g., by projecting optics **251,** is a superposition of, e.g., three temporally and spatially modulated composing light patterns generating the spatially structured and spatially translating output light pattern **130.** It should be noted that the embodiments outlined with respect to **Figure 4** may at least obviate the need of employing, for example, beam splitters, for the superposition of composing light patterns **120.**

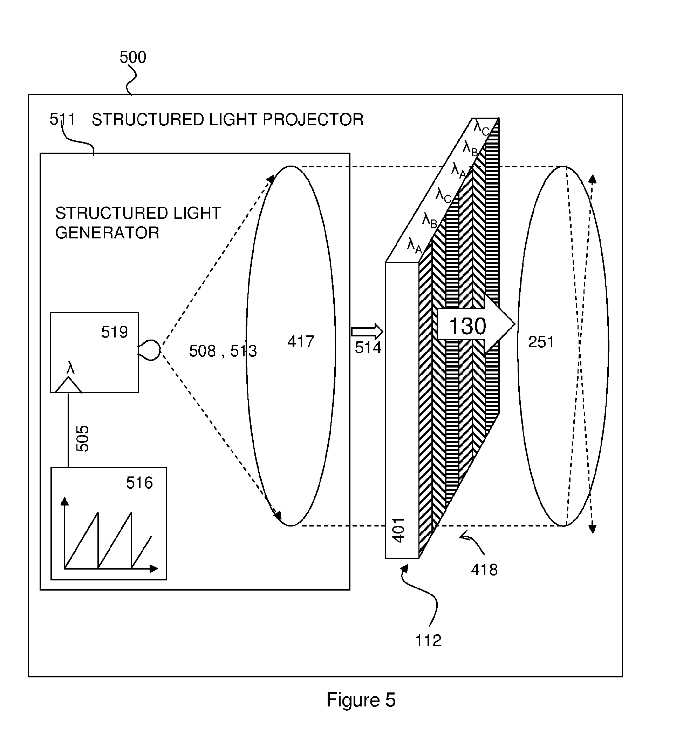

It should also be noted that an acquisition device of a topography measurement system employing the described embodiment of structured light projectors **400** and **500,** which are schematically illustrated in **Figure 4** and **5,** should be responsive to any of the centre wavelengths of the at least two point light sources **219,** since the spectral content of spatially structured and spatially translating output light pattern **130** may evolve temporally, i.e., shifting of the different central peak wavelengths takes place.

Further considering the embodiment respective of **Figure 4,** structured light generators **110** may share features with each other such as, for example, collimator **417** and transmission filter **418** provided on, comprised in or embodied by substrate **401.** In some embodiments, at least two temporally modulated light sources **111** may be combined in a single light source (not shown) and configured with temporal modulators **216** such to be operative to emit light with temporally tuned wavelength. Furthermore, the area of transmission filter **418** illuminated by different modulated light sources **111** may be inherently fully overlapping in the embodiment wherein at least two modulated light sources **111** are combined in one single point light source.

Further reference is made to **Figure 5.** According to embodiments, a temporally modulated light source **511** may include a light source **215** that may employ a tunable point light source **519,** a wavelength control unit **516,** and collimator **417.**

Wavelength control unit **516** is operatively coupled with tunable point light source **519** such that a wavelength control signal **505** generated by wavelength control unit **516** causes the wavelength of the light emitted by tunable point light source **519** to be temporally modulated in a manner to attain temporally wavelength-modulated light **508.** Temporally wavelength-modulated light **508** may then be transformed to superposed temporally modulated and collimated light **514,** e.g., by collimator **417.**

Wavelength control signal **505** may be temporally varied continuously or in discrete steps. Accordingly, the center wavelength of superposed temporally modulated and collimated light **514** obtained, and hence of output light intensity **513** emanating from collimator **417** is temporally varied as a function of wavelength control signal **505.** Thus, output light intensity **513** of tunable point light source **519** is equivalent to a superposition of output intensities **113** of several temporally modulated light sources **111,** each having a different centre wavelength.

Superposed temporally modulated and collimated light **514** is filtered by the superposed colour filters. Since each one of the colour filters is characterized by a different wavelength dependence of its transmission coefficient, each one of the colour filters is illuminated with a different temporally modulated intensity **113** at the wavelength of its maximum spatial modulation, analogous to what is outlined herein above with respect to the continuous variation of point light sources **219** outlined with respect to **Figure 4.** Spatially structured and translating output light pattern **130** of the described embodiment of structured light projector **500** according to the disclosed technique may, therefore, display the properties of a translated rigid pattern.

The temporal translation of spatially structured and translating output light pattern **130** may be continuous or discontinuous depending on parameters such as whether control signal **505** is temporally continuous or discontinuous, the spectral bandwidth of tunable point light source **519** with temporally tuned wavelength **511,** and the spectral width and mutual spectral overlap of the spatially modulated spectral range of the superposed colour filters constituting transmission filter **418.**

The scope of the disclosed technique extends to a topography measurement system employing structured light projectors **100, 400** and **500** as described above.

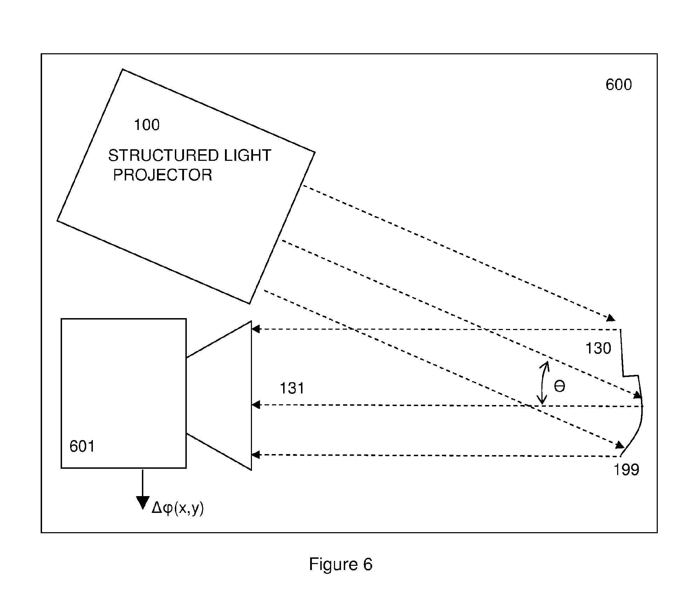

Additional reference is made to **Figure 6.** A topography measurement system **600** may include a structured light projector **100, 400** or **500** according to any of the embodiments described above and an optical acquisition device **601.**

Spatially structured and translating output light pattern **130** is projected onto sample surface **199** by structured light projector **100, 400** or **500.** Spatially structured and translating output light pattern **130** projected onto surface **199** may be a continuously or discontinuously translated rigid pattern. Since optical acquisition device **601** observes sample surface **199** at a non-zero angle θ from the projection direction of the structured light projector, the light pattern (hereinafter: "reflected light pattern") **131** that may be diffusely reflected by sample surface **199** and observed by optical acquisition device **601** is distorted by the variations of height of sample surface **199.** This distortion corresponds to a local phase shift of spatially structured and translating output light pattern **130** observed by optical acquisition device **601** that is a function of the local topographic height of sample surface **199.** Optical acquisition device 601 is thus able to determine the local height of sample surface by determining the local phase shift $\Delta\varphi$ as a function of the lateral coordinates $x, y$.

For example, optical acquisition device **601** may determine the local phase shift either by determining the spatial phase shift determined from the pattern observed at a fixed time or by determining the temporal phase shift computed from the pattern observed at a fixed point over a period of time. The latter of the two methods offers the advantage that only intensity information diffusely reflected from a small local area on the target surface is used for determination of the local height. For this reason the resulting height measurement is very robust against local variations of the reflectivity of sample surface **199.** In the other option which is based on determining the local spatial phase shift at a fixed time, local variation of the reflectivity of sample surface **199** may result in distortion of the reflected pattern and consequent measurement errors of the phase and topographic height.

A method for generating spatially structured light and translating light pattern may include, for example, the following procedures:

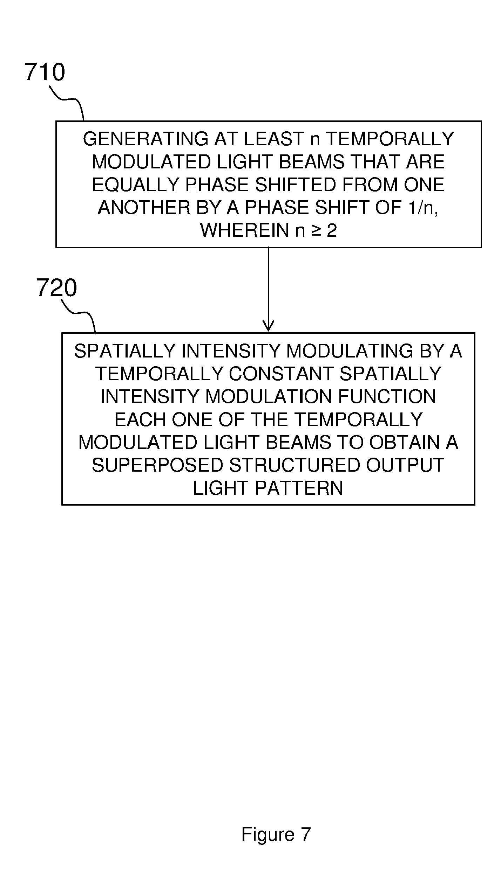

Additional reference is made to **Figure 7.** In embodiments, the method includes, as indicated by procedure **710,** generating at least n temporally modulated light **108** that are equally phase shifted from one another by any suitable phase shift that is selected such to attain spatially structured and translating output light pattern **130** such as, for example, a phase shift of, e.g., $2\pi/n$, wherein $n \geq 2$, e.g., by employing modulated light sources **111.**

In embodiments, the method may include, as indicated by procedure **720,** spatially intensity modulating by a temporally constant spatially intensity modulation function temporally modulated light **108** to obtain a spatially structured and spatially translating output light pattern **130.**

**Claims**

1. A method for generating a spatially structured and spatially translated output light pattern
   **characterized in that**
   the method comprises the following procedures:

   a) (710) generating at least n temporally modulated lights (108, 408, 508, 114, 414, 514) that are phase shifted from one another by a suitable, corresponding phase shift, wherein $n \geq 2$; and
   b) (720) spatially intensity modulating by a temporally constant spatially intensity modulation function each one of said temporally modulated lights (108, 408, 508, 114, 414, 514).

2. The method according to claim 1, wherein procedure b) comprises:

   b1) spatially intensity modulating by a temporally constant spatially intensity modulation function each one of said temporally modulated lights (108, 114) to obtain composing light patterns (120); and
   b2) superposing the composing light patterns (120) to obtain a spatially structured and spatially translating output light pattern (130).

3. The method according to claim 1, wherein procedure b) comprises:

   b1) superposing said temporally modulated lights (408, 414, 508, 514); and
   b2) spatially intensity modulating by a temporally constant spatially intensity modulation function said superposed temporally modulated lights (408, 414, 508, 514) to obtain a spatially structured and spatially translating output light pattern (130).

4. The method according to any of the preceding claims, further comprising the procedure of

   d) illuminating a sample surface (199) with the spatially structured and spatially translating output light pattern (130) to obtain a reflected light pattern (131), and
   e) determining the local phase shift of said reflected output light pattern (131).

5. The method according to any of the preceding claims, wherein the spatial intensity modulation function of at least one of the composing light patterns (120) is a temporally varying sine-based function.

6. The method according to claim 5, wherein said spatially structured and translating output light pattern (130) is continuously translating.

7. The method according to claim 1 or 4 wherein the spatial intensity modulation function of at least one of the composing light patterns (120) is a temporally varying square-wave based function.

8. The method according to any to one of the claim 7, wherein said spatially structured and translating output light pattern (130) is discontinuously translating.

9. The method according to any of the preceding claims, wherein the intensity of the spatially structured and translating output light pattern (130) exhibits a spatial translation over time of a spatially rigid intensity pattern.

10. The method according to any of the preceding claims, comprising the procedure of collimating the temporally modulated lights (108, 508).

11. A structured light projector (100, 400, 500) **characterized by** comprising:

   at least one structured light generator (110, 310) comprising:

   at least one light source (215) and at least one temporal modulator (216), wherein said at least one structured light generator (110, 310) and said at least one temporal modulator (216) are configured to be operative to emit n temporally modulated lights (108, 408, 508, 114, 414, 514) that are phase shifted from one another by a suitable phase shift, wherein $n \geq 2$; and
   at least one spatial transmission filter (218, 418) that is optically coupled with said at least one light source (215) and configured such to be operative to apply a temporally constant spatially intensity modulation function to each one of said temporally modulated lights (108, 114, 408, 414, 508, 514).

12. The structured light projector (100, 400, 500) according to claim 11, comprising superposing optics (260) that is operative to superpose composing light patterns (120) generated by at least one structured light generator (110, 310) or to superpose temporally modulated lights (408, 508).

13. The structured light projector (100, 400, 500) according to claim 11 or 12, comprising at least one collimator (217, 417) that is operative to collimate said temporally modulated light (108, 508) to obtain temporally collimated light (114, 514).

14. The structured light projector (400, 500) according to any of the claims 11 to 13, wherein said transmission filter (418) comprises at least two colour filters that are arranged in superposition such that the transmission filter (418) applies a spectrum-dependent spatial modulation function when illuminated with light at varying spectra to which the transmission filter (218) is responsive such that at the output of transmission filter (218) a correspondingly varying and spatially translating output light pattern (130) is obtained.

15. A topographic surface height measurement system (600) comprising a structured light projector (100, 400, 500) according to any of the claims 11 to 14,
comprising an optical acquisition device (601) that is positioned at a non-zero angle with respect to the projecting axis z of said structured light projector (100, 400, 500)

Figure 1

100

STRUCTURED
LIGHT
PROJECTOR

110B

STRUCTURED
LIGHT
GENERATOR
111B

110C

STRUCTURED
LIGHT
GENERATOR
111B

216B

216C

219B

108B

215B

219C

108C

215C

217B

217C

218B

114B

114C

218C

110A  111A  219A          215A

120B

120C

216A

t

114B

120A

217A

240

130

251

130

218A

199

108A

261

262

130

260

Figure 2

Figure 3

Figure 4

500

511   STRUCTURED LIGHT PROJECTOR

STRUCTURED LIGHT
GENERATOR

519

λ

505

516

508 , 513    417

514

$\lambda_C$
$\lambda_B$
$\lambda_A$
$\lambda_C$
$\lambda_B$
$\lambda_A$

130

251

401

112

418

Figure 5

600

100

STRUCTURED LIGHT
PROJECTOR

130

131

601

199

θ

Δφ(x,y)

Figure 6

710

GENERATING AT LEAST n TEMPORALLY
MODULATED LIGHT BEAMS THAT ARE
EQUALLY PHASE SHIFTED FROM ONE
ANOTHER BY A PHASE SHIFT OF $1/n$,
WHEREIN $n \geq 2$

720

SPATIALLY INTENSITY MODULATING BY A
TEMPORALLY CONSTANT SPATIALLY
INTENSITY MODULATION FUNCTION
EACH ONE OF THE TEMPORALLY
MODULATED LIGHT BEAMS TO OBTAIN A
SUPERPOSED STRUCTURED OUTPUT
LIGHT PATTERN

Figure 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MERMELSTEIN et al.** Video-rate surface profiling with acousto-optic accordion fringe interferometry. *Opt. Eng.,* January 2000, vol. 39 (1), 106-113